# EUROPÄISCHE PATENTSCHRIFT

(11) **EP 0 439 782 B1**
(45) Veröffentlichungstag und Bekanntmachung des Hinweises auf die Patenterteilung: **26.04.1995**
(21) Anmeldenummer: 90124659.5
(22) Anmeldetag: 19.12.1990
(51) Int. Cl.: H04H 1/00

(54) **Empfänger für Tonrundfunksendungen**
Receiver for broadcast transmissions
Récepteur pour transmissions radiodiffusées

(30) Priorität: 02.02.1990 DE 4003082
(43) Veröffentlichungstag der Anmeldung: 07.08.1991
(73) Patentinhaber: Blaupunkt-Werke GmbH, 31132 Hildesheim (DE)
(72) Erfinder: Bochmann, Harald, Dr., W-3000 Hannover 21 (DE); Schulze, Henrik, Dr., W-3150 Peine (DE); Hagenauer, Joachim, W-8031 Seefeld (DE); Höher, Peter, W-8031 Seefeld (DE)

(56) Entgegenhaltungen:
- EP-A- 0 035 166
- DE-A- 3 224 493

## Beschreibung

Gegenstand des Schutzrechtes ist ein neuer Empfänger für Tonrundfunksendungen.

Die zunehmende Verbreitung der Compact-Disc (CD) als Tonträger, auf deren Spuren die Musikstücke nach einer Digitalisierung Bit für Bit nacheinander gespeichert sind, hat auch die Frage nach der Ausstrahlung von Rundfunksendungen in digitaler Form aufkommen lassen, das heißt, die Modulation des dem Sender zugeordneten Trägers mit binären Signalen (siehe z.B. Dokument EP-A-0 035 166).

Bei der Suche nach Lösungen für diese Frage hat man dem Einfluß der Ausbreitungsprobleme der Träger der Rundfunksendungen und vor allem deren Empfang an unterschiedlichen Orten durch ein in ein Fahrzeug eingebautes Autoradio auf ein digitales Signal Rechnung zu tragen.

Die Feldstärke eines Trägers an einem bestimmten Ort wird sowohl durch die Entfernung zum Sender als auch durch Mehrwegeempfangsmöglichkeiten bestimmt. Letztere können sich schon auf kurzen Entfernungen stark ändern. Die dadurch verursachten Schwankungen der Feldstärke bei einem Empfang des Senders in einem Autoradio können bis zum momentanen Verlust der Empfangbarkeit führen. Damit fehlen bei der Übertragung von binären Signalen mehr oder weniger lange Bitfolgen, die sich selbst dann stark störend bemerkbar machen, wenn ein analog übertragenes Signal dort einen nur wenig gestörten Eindruck hervorruft. Der Einbruch bei der Empfangbarkeit ist aufgrund der Mehrwegeempfangseigenschaften überdies frequenzabhängig.

Die Aufgabe, die sich bei dem bekannten Stand der Technik stellte, bestand insbesondere im Aufbau eines Autoradios mit Einrichtungen, die den Folgen der Verminderung der Empfangbarkeit eines Senders entgegenwirken.

Eine Lösung dieser Aufgabe ist im Anspruch 1 des Schutzrechtes gekennzeichnet.

Merkmale weiterer Ausgestaltungen dieser Lösung sind in den abhängigen Ansprüchen festgehalten.

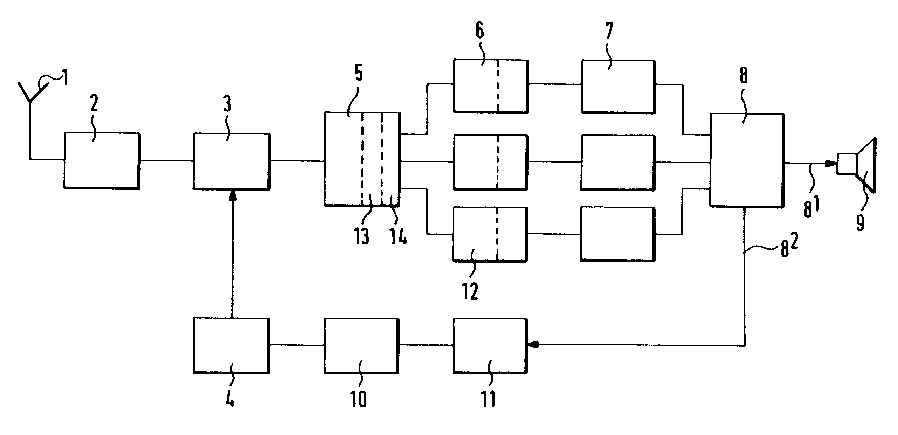

Ein Ausführungsbeispiel der Erfindung ist anhand der Zeichnung näher erläutert.

Der neue als Autoradio geeignete Empfänger für Tonrundfunksendungen ist an eine für den Empfang eines Trägers eines oberhalb des UKW-Bandes liegenden Senders geeignet bemessene Antenne 1 angeschlossen. Der Ausgang der Eingangsstufe 2 des Autoradios führt auf eine Mischstufe 3, die mit einem Mischoszillator 4 verbunden ist. An den Ausgang der Mischstufe 3 ist ein Zwischenfrequenzfilter 5 angeschlossen. Dieses Zwischenfrequenzfilter 5 weist mehrere Ausgänge auf, an die Demodulatoren 6 für die im Zwischenfrequenzsignal enthaltenen Unterträger angeschlossen sind. Jeder der Demodulatoren 6 ist auf einen anderen ihm zugeordneten Unterträger abgestimmt.

Die in den Demodulatoren 6 von den Unterträgern demodulierten Signale werden in Schreib-/Lesespeichern 7 zwischengespeichert. An diese Gruppe von Zwischenspeichern ist eine Auswerteeinheit 8 angeschlossen, die über einen Ausgang 8¹ verfügt, an dem das Signal für den Lautsprecher 9 abgreifbar ist.

Die Eigenfrequenz des Mischoszillators 4 ist durch eine Steuerschaltung 10 beeinflußbar. Die Veränderung der Eigenfrequenz erfolgt in bestimmten zeitlichen Abständen zwangsläufig, d. h. taktweise. Das Maß der jeweiligen Veränderung der Eigenfrequenz von Takt zu Takt ist in einem Speicher 11 enthalten.

In dem hier beschriebenen Ausführungsbeispiel verfügt der Speicher 11 über einen Eingang, der mit einem weiteren Ausgang 8² der Auswerteeinheit verbunden ist. An diesem Ausgang läßt sich die Größe der beim Übergang zum Folgetakt vorzunehmenden Frequenzänderung abgreifen, wenn diese in dem übertragenen Signal enthalten ist.

Die vorgegebenen Frequenzdifferenzen können jedoch auch in Form einer Tabelle in dem Speicher 11 abgelegt sein und von der Steuerschaltung 10 daraus abgerufen werden.

Ein solcher Empfänger gehört zu einem Übertragungssystem, das die Verminderung der Folgen der Empfangbarkeit in folgender Weise kompensiert. Ausgangspunkt ist eine digitale Darstellung eines analogen Mikrofonsignals. Es gilt ganz allgemein, daß die Abtastrate des Mikrofonsignals so gewählt wird, daß sie mindestens doppelt so groß ist wie die höchste Frequenz, die übertragen werden soll. Zugleich kann die Zahl der zur Darstellung des Momentanwertes verwendeten binären Digits höchstens so groß gewählt werden, daß diese Zahl multipliziert mit der Zeitdauer eines Bits zwischen zwei Abtastzeitpunkten nacheinander übertragen werden kann.

In der Regel wählt man jedoch höhere Abtastraten und kürzere Zeiten für die Dauer eines Bits als nach diesen Prämissen erforderlich. Die Dauer eines Bits darf andererseits nicht so kurz gewählt werden, daß bei der seriellen Übertragung die beim späteren Mehrwegeempfang auftretenden Laufzeitunterschiede von bis zu 100 »sec zwischen den auf den mehreren Wegen an der Antenne eintreffenden Signale die Erkennbarkeit der binären Signale wesentlich beeinträchtigen; d. h. die Dauer eines Bits muß vernünftig groß gegenüber der Zeit sein, in der noch nicht alle "Mehrwege" auf demselben Level - "high" oder "low" - sind und daher noch unterschiedliche Werte zur Antenne übertragen.

Durch die Wahl von einer Vielzahl A von Unterträgern kann man nun A-Bits parallel übertragen. Dadurch hat man für jedes Bit eine A-fache Übertragungszeit gegenüber der seriellen Bit-Übertragung verfügbar. Ist die Zahl ausreichend groß, dann lassen sich zwischen je zwei Abtastwerten noch Zusatzinformationen einschieben, die zur Steuerung des Empfängerstatus, z. B. zur Synchronisation erforderlich sind.

Durch die Veränderung der Eigenfrequenz des Mischoszillators läßt sich der Empfänger auf eine andere Frequenz umschalten, ohne an dem Zwischenfrequenzfilter oder der Auswerteschaltung eine Änderung vornehmen zu müssen. Diese Änderung der Frequenz, die natürlich im Sender und Empfänger synchron erfolgen muß, bewirkt, daß die Übertragung eines Signals für eine gewisse Zeit in einen anderen Frequenzbereich verlagert wird. Dies ist von Vorteil, wenn ein bestimmter Frequenzbereich durch die Bedingungen des Mehrwegeempfangs am Empfangsort stark gestört ist, andere Frequenzbereiche dagegen weniger. Der Empfänger nach dem Ausführungsbeispiel ist dadurch, daß er die Größe des nächsten Frequenzsprunges dem empfangenen Signal selbst entnehmen kann, besonders flexibel handhabbar.

Eine Änderung der Empfangsverhältnisse tritt nun in einem im fahrenden Fahrzeug installierten Empfänger besonders häufig auf. Daher ist der erfindungsgemäße Empfänger besonders als Autoradio geeignet.

Die Taktzeiten, d. h. die Verweilzeit des Empfängers auf einer bestimmten Frequenz, damit auch die Verweilzeit des Senders, muß so groß gewählt werden, daß die Auswerteeinheit 8 und gegebenenfalls vorzusehenden Entzerrern einschwingen können und die Störung durch die zusätzliche Modulation der Unterträger, die durch das Umschalten entsteht, gegenüber der Modulation durch die Bits gering bleibt. Aus der Erfahrung ergibt sich, daß während eines Taktes nicht weniger als 100 Bits übertragen werden sollten. Zur Modulation der Unterträger eignen sich unter anderem die bekannten PSK-, DPSK-, QPSK-, FSK- oder MSK-Verfahren. Bei sehr großen unterschiedlichen Echolaufzeiten auf den "Mehrwegen" kann es sinnvoll sein, in den Eingängen der Demodulatoren 6 Entzerrerschaltungen 12 vorzusehen. Diese Entzerrer lassen sich dann mittels Trainingssequenzen, die in das gesendete Signal eingeblendet werden, justieren.

Zweckmäßigerweise wird das Zwischenfrequenzfilter 5 durch einen A/D-Wandler 13 und einen Frequenz-Demultiplexer 14 abgeschlossen, so daß die Aufteilung des ZF-Frequenzblockes in die einzelnen Unterträgerbereiche bereits auf digitaler Ebene erfolgt.

In einem Tonrundfunksystem mit mehreren Programmen können die verschiedenen auszusendenden Programme im gleichen Takt die von ihnen belegten Kanäle bei der Frequenzänderung untereinander tauschen. Dann wird die im praktischen Betrieb erforderliche Bandbreite des Empfängers insgesamt nicht erhöht.

## Patentansprüche

1. Empfänger für in digitaler Form auf einem insbesondere oberhalb des UKW-Bandes liegenden Träger übertragene Signale einer Tonrundfunksendung mit einer der Eingangsstufe nachgeschalteten Mischstufe (3) und einer Zwischenfrequenzfilterstufe (5), dadurch gekennzeichnet,
- daß der Mischoszillator (4) der Mischstufe (3) in seiner Eigenfrequenz taktweise um vorgegebene Frequenzdifferenzen veränderbar ist,
- daß an die Zwischenfrequenzfilterstufe (5) mehrere Demodulatoren (6) für dem Träger aufmodulierte Unterträger angeschlossen sind,
- daß die von den Unterträger demodulierten binären Signale in Schreib-/Lesespeichern (7) zwischenspeicherbar sind,
- daß an diese Gruppe von Zwischenspeichern eine Auswerteeinheit (8) angeschlossen ist, die über einen Ausgang (8¹) verfügt,
- daß die Steuerschaltung (10) für den Mischoszillator (4) einen Speicher (11) für die beim Übergang in den Folgetakt vorzunehmenden Frequenzänderungen umfaßt
- und daß die Taktdauer groß gegenüber der Dauer einer binären Signalperiode ist.

2. Empfänger nach Anspruch 1,
dadurch gekennzeichnet,
daß der Speicher (11) in der Steuerschaltung (10) für den Mischoszillator (4) an einen Ausgang (8²) der Auswerteeinheit (8) für das empfangene Signal angeschlossen ist.

## Claims

1. Receiver for signals, transmitted in digital form on a carrier lying in particular above the VHF band, of a radio transmission with a mixing stage (3) which is connected downstream of the input stage and an intermediate frequency filter stage (5), characterized in that the mixing oscillator (4) of the mixing stage (3) can be changed in its own frequency in terms of clocking by prescribed frequency differences, in that a plurality of demodulators (6) for subcarriers which are modulated onto the carrier are connected to the intermediate frequency filter stage (5), in that the binary signals which are demodulated by the subcarriers can be buffered in write/read memories (7), in that an evaluation unit (8) which has an output (8¹) is connected to this group of buffers, in that the control circuit (10) for the mixing oscillator (4) comprises a memory (11) for the frequency changes to be performed during the change to the subsequent clock, and in that the clock period is large with respect to the length of a binary signal period.

2. Receiver according to Claim 1, characterized in that the memory (11) in the control circuit (10) for the mixing oscillator (4) is connected to an output (8²) of the evaluation unit (8) for the received signal.

## Revendications

1. Récepteur pour des signaux sous forme numérique intégré à une porteuse située notamment au-dessus de la bande VHF, pour une émission radiodiffusée, avec un étage mélangeur (3) en aval de l'étage d'entrée et un étage de filtre de fréquence intermédiaire (5), caractérisé en ce que :
- l'oscillateur mélangeur (4) de l'étage mélangeur (3) change de fréquence propre, de manière cadencée, et suivant des différences de fréquence prédéterminées,
- plusieurs démodulateurs (6) pour la sous-porteuse appliquée à la porteuse sont prévus dans l'étage de filtre de fréquence intermédiaire (5),
- les signaux binaires démodulés de la sous-porteuse sont enregistrés de manière intermédiaire dans une mémoire vive (7),
- ce groupe de mémoires intermédiaires est relié à un circuit d'exploitation (8) qui dispose d'une sortie (8¹),
- le circuit de commande (10) de l'oscillateur mélangeur (4) comprend une mémoire (11) pour les variations de fréquence à effectuer au passage de la cadence suivante,
- et en ce que la durée de la cadence est grande par rapport à la durée de la période d'un signal binaire.

2. Récepteur selon la revendication 1, caractérisé en ce que la mémoire (11) est reliée au circuit de commande (10) de l'oscillateur mélangeur (4) par une sortie (8²) du circuit d'exploitation (8) pour le signal reçu.
